Europäisches Patentamt

European Patent Office

Office européen des brevets

(19)

(11) Veröffentlichungsnummer: **0 309 871 B1**

(12) **EUROPÄISCHE PATENTSCHRIFT**

(45) Veröffentlichungstag der Patentschrift: **26.08.92**

(51) Int. Cl.5: **H02G 1/12**

(21) Anmeldenummer: **88115419.9**

(22) Anmeldetag: **21.09.88**

(54) **Handzange zum Abisolieren von Leiterenden.**

(30) Priorität: **02.10.87 DE 3733358**

(43) Veröffentlichungstag der Anmeldung:
**05.04.89 Patentblatt 89/14**

(45) Bekanntmachung des Hinweises auf die
Patenterteilung:
**26.08.92 Patentblatt 92/35**

(84) Benannte Vertragsstaaten:
**ES FR GB IT NL SE**

(56) Entgegenhaltungen:
**GB-A- 2 060 467**
**GB-A- 2 077 517**

(73) Patentinhaber: **WEZAG GMBH Werkzeugfabrik**
**Wittigstrasse 8**
**W-3570 Stadtallendorf(DE)**

(72) Erfinder: **Beetz, Horst, Dipl.-Ing.**
**Isarstrasse 23**
**W-3570 Stadtallendorf(DE)**
Erfinder: **Battenfeld, Kurt**
**Vor dem Wald**
**W-3551 Ebsdorfergrund 3-Wittelsberg(DE)**

(74) Vertreter: **Patentanwälte Dipl.-Ing. Rudolf Bi-**
**brach Dipl.-Ing. Elmar Rehberg**
**Postfach 3162 Am Kirschberge 22**
**W-3400 Göttingen(DE)**

EP 0 309 871 B1

**Beschreibung**

Die Erfindung bezieht sich auf eine Handzange zum Abisolieren von Leiterenden, mit einem Paar Handgriffe und mit einem Paar an die Leiterisolierung andrückbaren Klemmbacken, von denen die erste einstückig mit einem der Handgriffe ausgebildet einen Zangenkörper bildet, an dem der andere Handgriff und die zweite Klemmbacke schwenkbar gelagert sind, mit einem an dem beweglichen Handgriff gegen die Kraft einer Rückführfeder schwenkbar gelagerten und eine Rolle tragenden Steuerhebel, einem an der beweglichen Klemmbacke angeordneten, die Ausgangsstellung definierenden Anschlag, einer Steuerfläche und einem Endanschlag, die der Rolle des Steuerhebels zugeordnet sind, und mit zwei innerhalb der ein Zangenmaul bildenden Klemmbacken angeordneten und von einer Öffnungsfeder belasteten Abstreiferbacken, die an ihren dem Zangenmaul abgewandten Enden verschwenkbar miteinander verbunden und gemeinsam mittels eines nach einem vorbestimmten Schwenkweg des beweglichen Handgriffs wirksam werdenden Zugelements in Abstreifrichtung längsverschiebbar sind. Solche Handzangen werden benötigt, um die Isolierung von elektrischen Leitern der gewünschten Länge in einfacher Weise entfernen zu können, ohne daß der elektrische Leiter Schaden nimmt. Dabei muß berücksichtigt werden, daß sowohl die elektrischen Leiter wie auch deren Isolierung unterschiedliche Durchmesser aufweisen.

Eine Handzange der eingangs beschriebenen Art ist aus der DE-PS 24 02 187 bekannt. Der Zangenkörper wird von einem einstückigen, festen Handgriff mit einer daran befindlichen festen Klemmbacke gebildet. An diesem Zangenkörper ist um ein erstes Schwenklager der bewegliche Handgriff gelagert. An anderer Stelle befindet sich ein zweites Schwenklager am Zangenkörper, um welches die bewegliche Klemmbacke gelagert ist. Diese bewegliche Klemmbacke ist in Richtung auf den beweglichen Handgriff stumpf abgewinkelt und weist an ihrer freien Stirnkante einen Anschlag, eine Steuerfläche und einen Endanschlag auf, die mit einem Steuerhebel zusammenarbeiten, der auf dem beweglichen Handgriff schwenkbar gelagert ist und an seinem freien Ende eine Rolle trägt, die mit dem Anschlag, der Steuerfläche und dem Endanschlag in Berührung kommt. Eine als Zugfeder ausgebildete Rückführfeder beeinflußt den Steuerhebel in einer Verschwenkrichtung. Separat davon sind in den Klemmbacken Abstreiferbacken verschiebbar gelagert, die von einer Öffnungsfeder an die Klemmbacken angepreßt werden und die vermittels eines Zugelements in Abziehrichtung sowie in der Gegenrichtung durch die Kraft einer gesonderten Feder bewegbar gelagert sind. Mit dem Zugelement ist eine weitere Rolle verbunden, mit der die Rolle des Steuerhebels in der entsprechenden Stellung in Wirkverbindung tritt und insoweit die Abziehbewegung einleitet. Die Steuerfläche an dem beweglichen Klemmbacken ist in bestimmter Winkellage zu der Erstreckung bzw. Kraftwirkung des Steuerhebels angeordnet, um bei Beginn der Zusammendrückung der Handgriffe zunächst die Klemmbacken und damit auch die Abstreiferbacken zu schließen, wobei sich die Klemmbacken an die Isolierung des Leiters anlegen und die Abstreiferbacken in diese Isolierung bis zu gewisser Tiefe einschneiden. Bei dieser Schließbewegung der Klemmbacken und der Abstreiferbacken gelangt der Steuerhebel durch die Betätigung des beweglichen Handgriffs in eine sich mit der Schließbewegung der Klemmbacken kontinuierlich ändernde Relativlage zu der Steuerfläche. Beim Abisolieren unterschiedlich dicker Leiter endet der Schließvorgang der Klemmbacken in unterschiedlicher Winkelstellung der beweglichen Klemmbacke zu dem Zangenkörper, wodurch die Steuerfläche an dem Klemmbacken auch eine jeweils unterschiedliche Winkelstellung zu dem Steuerhebel und seiner am freien Ende angeordnete Rolle einnimmt. Durch diese unterschiedliche Relativlage der Steuerfläche zum Steuerhebel abhängig vom Durchmesser der zu isolierenden Leiter ergeben sich unterschiedliche Abzugsverhältnisse und insbesondere zu überwindende Abzugskräfte, so daß eine solche Handzange nur für gewisse Durchmesserbereiche der Leiter anwendbar ist. Die bekannte Handzange läßt sich in einem Bereich von 0,5 bis 4 mm$^2$ Querschnittsfläche einsetzen. Für andere Querschnittsbereiche muß die Handzange in anderer Größenordnung und/oder unter Verwendung jeweils verschiedener Abstreifbacken eingesetzt werden. Der Anwendungsbereich dieser bekannten Handzangen ist vergleichsweise klein, so daß verschiedene Zangen für die verschiedenen Anwendungsbereiche eingesetzt werden. Außerdem ist bei der bekannten Zange die Art der Rückführung der Abstreiferbacken insofern nachteilig, als Voraussetzung für die Rückbewegung der Abstreiferbacken zunächst die Rückkehr des Steuerhebels an den Anschlag ist. Sobald jedoch die Rolle des Steuerhebels aus dem Endanschlag ausgelöst wird, führt die Kraft der Rückführfeder dazu, daß die Rolle des Steuerhebels schlagartig an die Steuerfläche angepreßt wird, wodurch der bewegliche Klemmbacken eine zu diesem Zeitpunkt unerwünschte Schließbewegung ausführt, wodurch wiederum notwendigerweise auch die Abstreiferbacken geschlossen werden. Dabei kann dann eine zweite Rückführfeder an dem Zugelement zur Wirkung kommen und die Abstreiferbacken relativ in den Klemmbacken nach vorn zurückführen. Dabei besteht die Gefahr, daß das abisolierte Leiterende seitlich verdrückt oder beschädigt wird.

Aus der GB-PS 20 84 503 ist ebenfalls eine Handzange zum Abisolieren von Leiterenden bekannt, bei der eine feste Klemmbacke mit einem festen Handgriff den Zangenkörper bildet. An diesem Zangenkörper ist in einem ersten ortsfesten Schwenklager die bewegliche Klemmbacke gelagert, die ansonsten ein zweites Schwenklager für die Relativbewegung des beweglichen Handgriffs zu dem festen Handgriff trägt. Die Abstreiferbacken sind über ein Gelenk direkt mit dem beweglichen Handgriff verbunden. Der bewegliche Handgriff weist auch einen Anschlag und eine Steuerfläche auf, die mit einer federbelasteten Kugel zusammenarbeitet. Ein Steuerhebel ist bei dieser Handzange nicht vorgesehen. Wenn mit dieser Handzange Leiter unterschiedlicher Durchmesser abisoliert werden, wird auch hier die Klemmstellung der Klemmbacken in unterschiedlicher Winkellage beendet und es setzt nachfolgend der Abstreifvorgang ein, bei dem die Abstreiferbacken den erforderlichen Hub zurücklegen. Durch die mechanische Verbindung der Teile ist die Rückführbewegung genau umgekehrt, d. h. zunächst werden die geschlossenen Abstreiferbacken zurückbewegt und erst anschließend können die Klemmbacken öffnen. Auch dabei besteht die Gefahr, den elektrischen Leiter zu verdrücken und zu beschädigen.

Der Erfindung liegt die Aufgabe zugrunde, eine Handzange der eingangs beschriebenen Art derart weiterzubilden, daß sie für größere Durchmesserbereiche von abzuisolierenden Leitern verwendbar ist. Dabei soll eine funktionsmäßige Trennung des Schließvorgangs der Klemmbacken einerseits und des Abstreifvorgangs andererseits in der Weise erreicht werden, daß trotz unterschiedlicher Durchmesser der abzuisolierenden Leiter konstante Verhältnisse für die Abstreifbewegung vorliegen, so daß die Zange für größere Durchmesserbereiche anwendbar wird.

Erfindungsgemäß wird dies dadurch erreicht, daß der bewegliche Handgriff und die bewegliche Klemmbacke um eine gemeinsame Achse am Zangenkörper schwenkbar gelagert sind, daß die Abstreiferbacken über das Zugelement mit dem Steuerhebel gelenkig verbunden sind, und daß der Anschlag, die Steuerfläche und der Endanschlag in der beweglichen Klemmbacke angeordnet und ausschließlich der Abstreifbewegung zugeordnet sind. Dadurch, daß der bewegliche Handgriff und die bewegliche Klemmbacke nicht mehr um verschiedene, sondern um dieselbe Achse schwenkbar am Zangenkörper gelagert sind, ergibt sich die Möglichkeit, den beweglichen Handgriff und die bewegliche Backe durch den Steuerhebel kraftmäßig miteinander derart zu verbinden, daß eine Relativbewegung zwischen der beweglichen Backe und dem beweglichen Handgriff in Fortfall kommt. Hieraus resultiert eine Schließbewegung der Klemmbacken, bei der der Steuerhebel keinerlei Relativbewegung zu dem beweglichen Handgriff und der beweglichen Klemmbacke ausführt, sondern die beiden Teile nur insoweit miteinander verbindet, daß der Eindruck entsteht, daß auch die bewegliche Klemmbacke mit dem beweglichen Handgriff nach Art eines einstückigen, durchgehenden Zangenkörpers verbunden sei. Insbesondere findet auch keine Relativbewegung der Rolle des Steuerhebels gegenüber der beweglichen Klemmbacke und dem dort gebildeten Anschlag statt, so daß der gesamte Steuerhebel einschließlich seiner Gelenkpunkte relativ zu der Steuerfläche an der beweglichen Klemmbacke immer in derselben Relativlage ist, unabhängig davon, welcher Leiter mit welchem Durchmesser zwischen den Klemmbacken eingeklemmt wurde. Mit anderen Worten ist dabei die Schließbewegung der Klemmbacken funktionsmäßig von der Abstreifbewegung völlig getrennt und es liegen am Übergang der Schließbewegung zu der Abstreifbewegung, also dann, wenn die Klemmbacken geschlossen haben und keine Relativbewegung mehr zueinander ausführen, immer identische Verhältnisse vor. Hierdurch ist es möglich, die Handzange für einen größeren Durchmesserbereich einzusetzen. Versuche haben gezeigt, daß ein Querschnittsbereich von 0,05 bis 6,0 mm$^2$ mit ein und derselben Handzange abgedeckt werden kann. Im Stand der Technik werden zur Abdeckung dieses angegebenen Durchmesserbereichs drei verschieden groß gestaltete Zangen benötigt. Durch die funktionsmäßige Trennung der Schließbewegung der Klemmbacken von der Abzugsbewegung der Abstreiferbacken ist es möglich, die Steuerfläche und den Endanschlag ausschließlich dieser Abstreiferbewegung zuzuordnen und entsprechend auszubilden. Während der Abstreiferbewegung läuft dann immer die gleiche Relativbewegung zwischen dem Steuerhebel und der beweglichen Klemmbacke ab, so daß nicht nur der Druckpunkt beim Durchreißen der Isolierung immer an der gleichen Stelle liegt, sondern auch der Endanschlag immer in der gleichen Relativlage wirksam ist. Durch die Verbindung des Steuerhebels mit den Abstreiferbacken über das Zugelement ist die Vorwärts- wie auch die Rückwärtsbewegung der Abstreiferbacken unmittelbar von der Relativlage des Steuerhebels abhängig und es genügt, nur eine Rückführfeder vorzusehen. Durch die Anordnung des Anschlags, der Steuerfläche und des Endanschlags in der beweglichen Klemmbacke in Verbindung mit der Ausgestaltung des Steuerhebels wird es möglich, die Rückführung so zu gestalten, daß zunächst die Klemmbacken und die Abstreiferbacken öffnen und erst dann der Rückhub der Abstreiferbacken in geöffnetem Zustand in den Klemmbacken stattfindet. Damit ist die Gefahr der Beschädigung des abisolierten Leiterendes behoben.

Zwischen Anschlag und Steuerfläche kann eine eine Kraftschwelle bildende Erhöhung, Nocken o. dgl. vorgesehen sein. Die Steuerfläche läuft also nicht genau tangential in den Anschlag, der als Ausrundung ausgebildet ist und in dem die Rolle anliegt, ein, sondern es ist eine Erhöhung an dieser Stelle vorgesehen, über die die Rolle des Steuerhebels erst dann hinweggleitet, wenn die Handgriffe unter Überwindung einer entsprechenden Kraft weiter zusammengepreßt werden. Damit kann auch gleichzeitig die Klemmkraft festgelegt werden, mit der die Klemmbacken sich an der Isolierung des Leiters anlegen sollen. Es versteht sich, daß diese Kraftschwelle nicht nur von der Ausgestaltung der Erhöhung bzw. des Übergangs zwischen dem Anschlag und der Steuerfläche ausgebildet ist, sondern auch von der Kraft der Rückführfeder.

Der Endanschlag kann etwa rechtwinklig zu der Steuerfläche angeordnet sein, wobei der Übergang zur Steuerfläche aber verständlicherweise abgerundet ist. Diese etwa rechtwinklige Anordnung des Endanschlags relativ zur Steuerfläche ist insofern sinnvoll, also die Öffnungsbewegung der Klemmbacken und der Abstreiferbacken hierdurch begünstigt wird, bevor die Kraft der Rückführfeder wirksam wird.

Der Steuerhebel kann zwischen seinem Gelenk an dem beweglichen Handgriff und seinem Gelenk an der beweglichen Backe mit dem Zugelement verbunden sein. Die Anlenkung erfolgt also im Zwischenbereich, so daß der Hub der Rolle am freien Ende des Steuerhebels und der dort zurückgelegte Weg größer ist als der Weg des Zugelements. Insoweit findet eine Kraftübersetzung statt, die zum Aufbringen der Losbrech- bzw. Durchreißkraft an der Isolierung des Leiters sinnvoll ist. Obwohl das auf dem beweglichen Handgriff angeordnete Lager des Steuerhebels auch auf einer Kreisbahn um die gemeinsame Achse geführt wird, erfolgt die Bewegung des Zugelements in etwa linear in Abzugsrichtung.

Die den Steuerhebel belastende Rückführfeder kann auch zur Rückführung der Abstreiferbacken ausgebildet und angeordnet sein, so daß durch die direkte Kopplung zwischen dem Zugelement und dem Steuerhebel sich die Anordnung und Ausbildung zweier getrennter Rückführfedern für den Steuerhebel einerseits und das Zugelement andererseits erübrigt. Die Rückführfeder ist zweckmäßig etwa in der Steuerfläche wirkend angeordnet, so daß die Rückführfeder ihre maximale Kraft quer zum Endanschlag und in Richtung auf die Steuerflächen abgibt.

In der beweglichen Klemmbacke kann eine bumerangartige Ausnehmung vorgesehen sein, die den Anschlag, die Steuerfläche und den Endanschlag bildet und in der die Rolle des Steuerhebels geführt und geschützt untergebracht ist. Dabei wird die ohnehin erforderliche Klemmbacke im Bereich zwischen ihrem Drehlager am Zangenkörper und dem Zangenmaul dazu benutzt, um den Anschlag, die Steuerfläche und den Endanschlag zu bilden. Die Verlängerung der beweglichen Klemmbacken in einem stumpfen Winkel nach rückwärts entfällt. Gleichzeitig wird damit der auf Reibung empfindliche Mechanismus zwischen der Rolle des Steuerhebels, dem Anschlag, der Steuerfläche und dem Endanschlag geschützt im Innern der beweglichen Klemmbacke untergebracht, so daß Verschmutzungen hier weniger zu erwarten sind als bei nach außen freiliegender Steuerfläche, wie dies bisher bekannt ist. Die Handzange kommt damit auf eine wünschenswert kurze Baulänge.

Der Steuerhebel kann in bevorzugter Ausführungsform etwa rechtwinklig abgekröpfte Form aufweisen und mit einem Schenkel in die Ausnehmung an der beweglichen Klemmbacke einragend vorgesehen sein. Diese Form ist zweckmäßig zur Freigabe des Zangenmauls und gestattet im übrigen die ungehinderte Bewegung der Abstreiferbacken im Zangenmaul. Der Steuerhebel ist damit gleichzeitig geschützt im Innern untergebracht und der Raum zwischen den Handgriffen ist völlig frei und kann dort geschlossen ausgebildet werden.

Jeder Klemmbacken kann mindestens einen ortsfesten und mindestens einen beweglichen Klemmvorsprung aufweisen, wobei sich der bewegliche Klemmvorsprung an einem Steg abstützt, der schwenkbar in der Klemmbacke gelagert und durch ein Stützglied verstellbar ist. Damit ist es möglich, die Aufteilung der Klemmkraft am Ende der Schließbewegung der Klemmbacken auf den festzuhaltenden Teil der Isolierung des Leiters einzustellen. Die Einstellung kann auch relativ zu der Schneide der Abstreiferbacken erfolgen. Wenn jedoch der Steg zugleich eine einstellbare Abstützung für eine Abstreiferbacke bildet, ist eine gemeinsame Einstellung unter Wahrung einer gewissen Relativlage zueinander möglich. Auch dies ist sinnvoll.

Die Erfindung wird anhand eines bevorzugten Ausführungsbeispiels weiter erläutert und beschrieben. Es zeigen:

Figur 1    eine Ansicht der Handzange im Ausgangszustand,

Figur 2    die Zange gemäß Figur 1 in aufgebrochenem Zustand kurz vor Erreichen einer Schließstellung der Klemmbacken,

Figur 3    eine Detaildarstellung des Mittelbereichs der Zange,

Figur 4    eine Darstellung eines Teils der beweglichen Klemmbacke mit Steuerhebel,

Figur 5     die Relativlage der wesentlichen Teile in der Ausgangsstellung,

Figur 6     die Relativlage der wesentlichen Teile nach der Schließen der Klemmbacken,

Figur 7     die Relativlage der Teile am Ende des Hubs einer Abstreifbewegung vor dem Öffnen des Zangenmauls und

Figur 8     die Relativlage der Teile am Ende des Hubs einer Abstreifbewegung nach dem Öffnen des Zangenmauls.

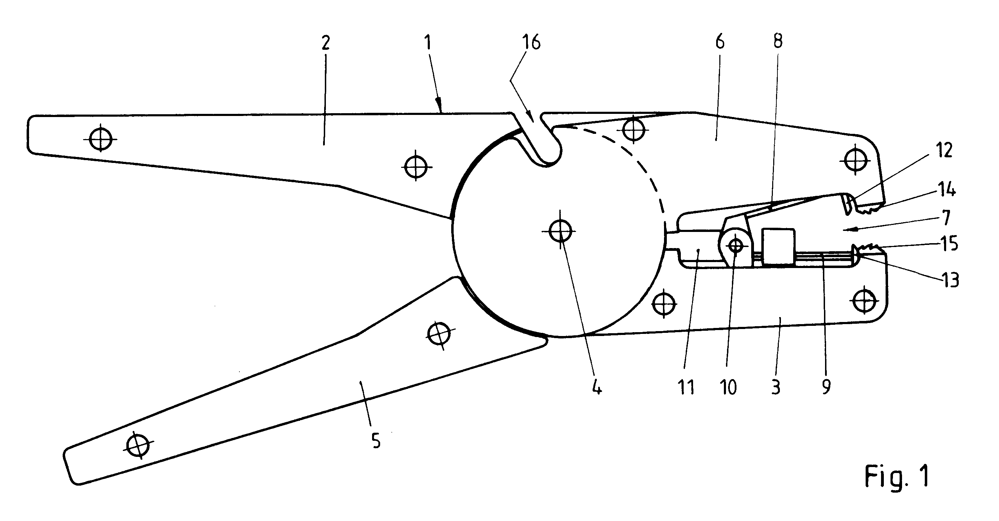

Die in Figur 1 etwa in natürlicher Größe dargestellte Handzange weist einen einstückigen Zangenkörper 1 auf, an dem ein fester Handgriff 2 und eine feste Klemmbacke 3 ausgebildet sind. Aus Montage- und/oder Herstellungsgründen kann natürlich dieser Zangenkörper 1 aus mehreren Teilen bestehen, die aber dann zu einem festen Körper zusammengesetzt sind. So ist beispielsweise eine Teilung in der Längsmittelebene der Zange möglich; funktional ist dieser Zangenkörper 1 jedoch einstückig. Um eine gemeinsame Achse 4 in der Mitte des Zangenkörpers 1 ist einerseits ein beweglicher Handgriff 5 und andererseits eine bewegliche Klemmbacke 6 schwenkbar angeordnet. Die Klemmbacken 3 und 6 bilden ein Zangenmaul 7, in welchem Gleitbahnen für zwei einander zugeordnete Abstreiferbacken 8 und 9 verschiebbar in Richtung des Zangenmauls angeordnet sind. Die Abstreiferbacken 8 und 9 sind um eine Achse 10 schwenkbar und dort mit einem Zugelement 11 verbunden, durch welches die Abstreiferbacken 8 und 9 in Richtung des Zangenmauls 7 hubartig angetrieben werden. Die Abstreiferbacken 8 und 9 besitzen an ihrem vorderen freien Ende Schneiden 12, 13, mit denen sie in Zuordnung zueinander in die Isolierung des abzuisolierenden Leiters bei der Betätigung der Handzange 1 eingreifen. Am freien Ende der Klemmbacken 6 und 3 sind Klemmvorsprünge 14 und 15 vorgesehen, mit denen sich die Klemmbacken 6 und 3 auf der Isolierung des abzuisolierenden Leiters in der Schließlage der Klemmbacken abstützen. Im Mittelbereich der Handzange ist zweckmäßig zwischen dem Zangenkörper 1 und dem beweglichen Handgriff 5 eine Schneideinrichtung 16 für das Ablängen von Leitern vorgesehen.

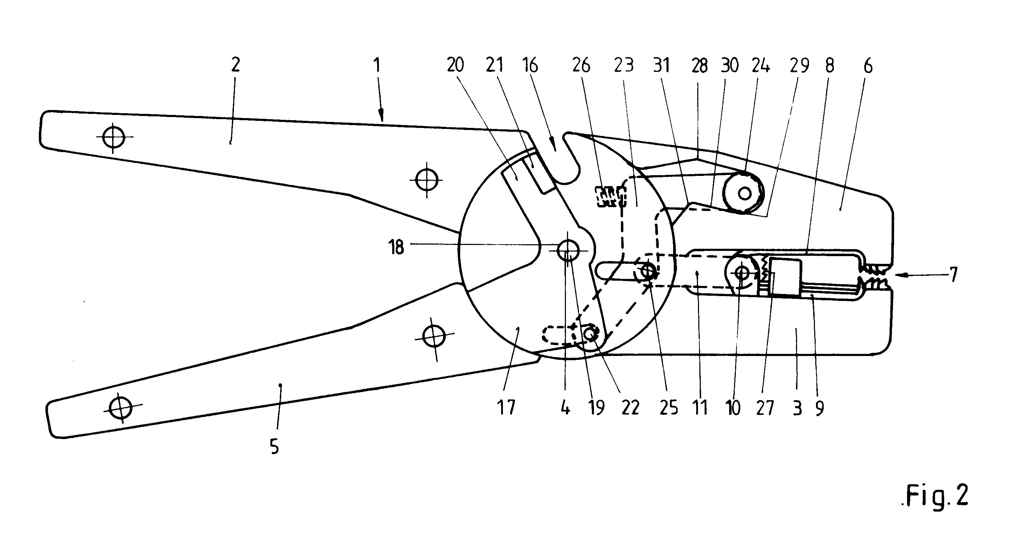

Figur 2 verdeutlicht den inneren Aufbau der Handzange. An dem beweglichen Handgriff 5, der, wie auch der feste Handgriff und die Klemmbacken 6 und 3, als Kunststoffspritzteile ausgebildet sein können, ist eine metallene Hebelplatte 17 vorgesehen, die eine Bohrung 18 aufweist, mit der sie und damit der bewegliche Handgriff 5 auf einem Zapfen 19 und somit um die Achse 4 schwenkbar gelagert ist. Die Hebelplatte 17 weist einen abstehenden Hebel 20 auf, an dem eine Schneide 21 gebildet ist, die Bestandteil der Schneideinrichtung 16 ist. An der Hebelplatte 17 ist ein Gelenk 22, beispielsweise in Form eines Zapfens o. dgl. gebildet, an welchem ein Steuerhebel 23, der bumerangartige, abgekröpfte Form aufweist, gelenkig angelenkt ist. Der Steuerhebel 23, der im Rahmen der Handzange doppelt ausgebildet ist, trägt an seinem freien Ende eine Rolle 24, die dort frei drehbar zwischen den beiden spiegelbildlich ausgebildeten Steuerhebeln 23 gelagert ist. Das Zugelement 11 ist an einem Gelenk 25 des Steuerhebels 23 angelenkt. Es ist eine Rückführfeder 26 vorgesehen, die als Druckfeder ausgebildet den Steuerhebel 23 im Rechtsdrehsinne um das Gelenk 22 belastet. Wenn die Steuerhebel 23 in doppelter Ausbildung, also spiegelbildlich, angeordnet sind, kann auch die Rückführfeder 26 doppelt ausgebildet sein. Das dem Steuerhebel 23 abgekehrte Ende der Rückführfeder 26 ist in der beweglichen Backe 6 abgestützt. Eine Öffnungsfeder 27, die auch als Schenkelfeder um die Achse 10 ausgebildet sein kann, belastet die Abstreiferbacken 8 und 9 im Öffnungssinn, so daß die Offenstellung der Abstreiferbacken 8 und 9 immer dann erreicht wird, wenn die Klemmbacken 3 und 6 dies zulassen. In der beweglichen Klemmbacke 6 ist eine Ausnehmung 28 vorgesehen, in der sich die Rolle 24 sowie das dort hineinreichende Teil des Steuerhebels 23 bewegen können. Innerhalb dieser Ausnehmung ist ein Anschlag 29, eine Steuerfläche 30 und ein Endanschlag 31 in der dargestellten Weise gebildet, mit denen die Rolle 24 des Steuerhebels 23 während der Betätigung der Handzange zusammenarbeitet. Figur 2 zeigt die Relativlage der Teile, die diese während einer Schließbewegung der Klemmbacken 3 und 6 einnehmen. Es sei besonders darauf hingewiesen, daß während dieser Schließbewegung die Rolle 24 unveränderlich an dem Anschlag 29 und in konstanter Relativlage anliegt.

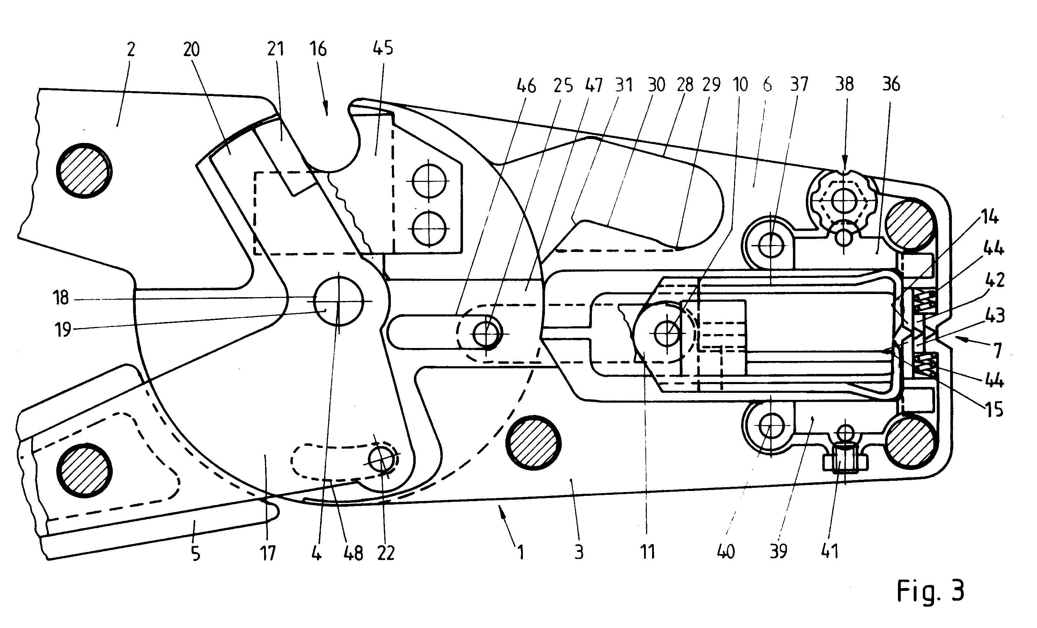

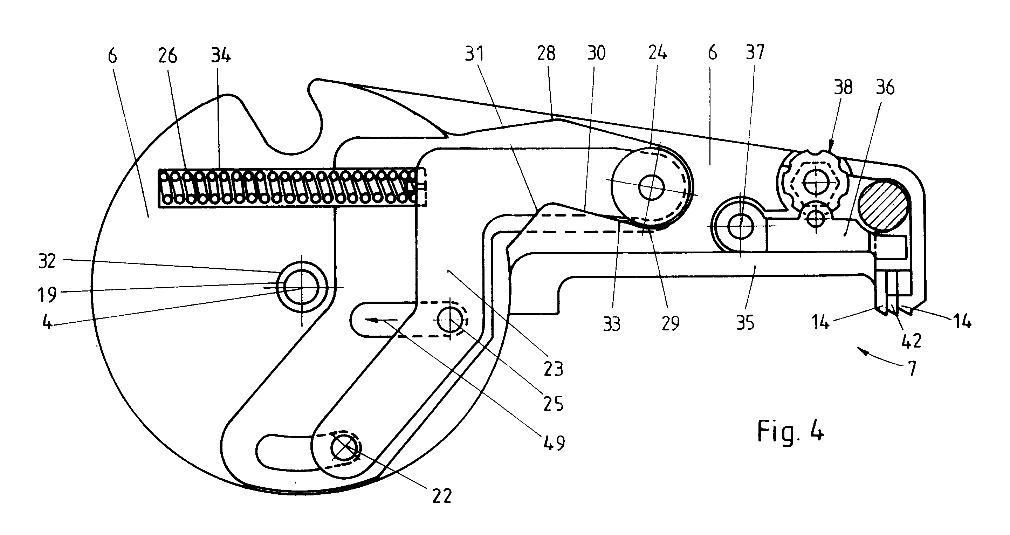

Die Figuren 3 und 4 sind in vergrößerndem Maßstab dargestellt, um die Einzelheiten klarer und überschaubarer zu verdeutlichen. Beide Zeichnungen sind einander zugeordnet, wobei der Steuerhebel 23 einschließlich der Rolle 24 der Übersichtlichkeit halber in Figur 3 weggelassen ist. Auch die bewegliche Klemmbacke 6 kann spiegelsymmetrisch aus zwei Teilen ausgebildet sein. Figur 4 zeigt eine Draufsicht auf dieses Teil mit dem zugehörigen Steuerhebel 23. Die bewegliche Klemmbacke 6 (Figur 4) besitzt eine Bohrung 32, ähnlich wie der Zangenkörper 1 eine Bohrung 18 aufweist. Diese Bohrungen 18 und 32 fluchten miteinander und dienen der Lagerung des Zapfens 19 für die verschiedenen Verschwenkbewegungen. Der Zapfen 19 ist in der Achse 4 angeordnet. Die bewegliche Klemmbacke 6 trägt die Ausnehmung 28, in deren Bereich, wie dargestellt, der Anschlag 29, die Steuerfläche 30 und der Endanschlag 31 ausgebildet sind. Der Endanschlag 31 erstreckt sich etwa rechtwinklig zur Steuerfläche 30. Zwischen dem Anschlag 29 und dem Beginn der Steuerfläche 30 ist eine Erhöhung 33 vorgesehen, die eine zu überwindende Kraftschwelle bildet. Die Klemmbacke 6 weist eine Vertiefung 34 auf, in der die Rückführfeder 26 angeordnet ist. Die Klemmbacke 6 und der Steuerhebel 23 sind in doppelter Anordnung spiegelsymmetrisch vorgesehen und befinden sich mit ihren wesentlichen Teilen auf Abstand zueinander, wobei zwischen den beiden Steuerhebeln 23 die Rolle 24 gelagert ist, die in diesem Bereich gleichzeitig die beiden Steuerhebel 23 verbindet. An der Klemmbacke 6 sind Gleitbahnen 35 ausgebildet (ebenso an der festen Klemmbacke 3), in denen die Abstreiferbacken 8 und 9 gleitend geführt sind. Im vorderen Bereich des Zangenmauls 7 ist im Bereich der Klemmbacke 6 ein Steg 36 um einen Zapfen 37 schwenkbar gelagert. Eine Einstelleinrichtung 38 gestattet die Verschwenkung des Stegs 36 und damit die Veränderung des Beginns der Gleitbahn 35, auf der sich die Abstreiferbacken 8 und 9 abstützen. Mit der Einstelleinrichtung 38 kann individuell die Eindringtiefe der Schneide 12 des Abstreiferbackens 8 (Figur 3) eingestellt werden. In ähnlicher Weise ist ein Steg 39 (Figur 3) um einen Zapfen 40 schwenkbar gelagert. Es ist eine versiegelbare Einstellschraube 41 in der festen Backe 3 vorgesehen, mit der werkseitig eine Grundeinstellung bzw. Justierung der Schneiden 12 und 13 zueinander vorgenommen wird. Die Einstelleinrichtung 38 dient dagegen der Einstellung während der Benutzung der Handzange. Die Stege 36 und 39 bilden jedoch nicht nur den Beginn der Gleitbahn 35, sondern sie sind in den Bereich der Klemmvorsprünge 14, 15 hinein verlängert und bilden gleichzeitig eine Abstützung für einen beweglichen Klemmvorsprung 42 neben festen Klemmvorsprüngen 14 im Bereich der beweglichen Klemmbacke 6, während im Bereich der festen Klemmbacke 3 ein beweglicher Klemmvorsprung 43 zwischen zwei festen Klemmvorsprüngen 15 vorgesehen ist. Federn 44 können in diese Abstützung eingeschaltet sein. Hieraus ist erkennbar, daß durch die Verlängerung der Stege 36 und 39 nicht nur die Eindringtiefe der Schneiden 12 und 13 der Abstreiferbacken 8 und 9 eingestellt wird, sondern gleichzeitig auch die beweglichen Klemmvorsprünge 42 und 43.

In Figur 3 ist noch eine Gegenschneide 45 dargestellt, die in dem Zangenkörper 1 ortsfest gelagert ist und mit der die Schneide 21 der Hebelplatte 17 zusammenarbeitet und somit die wesentlichen Teile der Schneideinrichtung 16 bildet. Die übrigen in den Figuren 3 und 4 dargestellten Einzelheiten dienen im wesentlichen der Montage und der Verbindung der Einzelteile. Sie sind für die Funktion der Handzange nicht grundsätzlich wichtig, so daß hier auf eine detaillierte Einzelbeschreibung verzichtet werden kann. Es sei nur noch einmal klargestellt, daß die Einzelteile der Handzange in ihrer Erstreckung quer zur Zeichenebene der Figuren 3 und 4 in folgender Reihenfolge angeordnet sind:

Zu unterst befindet sich der eine spiegelsymmetrische Teil der Klemmbacke 3 mit dem einen Steuerhebel 23. Es folgt der Zangenkörper 1 mit dem festen Handgriff 2 und der festen Klemmbacke 3, der seinerseits auch in der Längsmittelebene spiegelsymmetrisch geteilt ausgebildet ist. Dieser Zangenkörper 1 weist eine Ausnehmung 46 (Figur 3), die sich in Richtung der Achse 4 erstreckt, auf, durch die ein das Gelenk 25 realisierender Bolzen zwischen den beiden Steuerhebeln 23 und diese dabei verbindend gelagert ist. In einer weiteren Durchbrechung 47 ragt das Zugelement 11 in den Zangenkörper ein und ist seinerseits schwenkbar auf dem Bolzen des Gelenks 25 gelagert, während an seinem anderen Ende an der Achse 10 die Abstreiferbacken 8 und 9 angeordnet sind. Zwischen dem spiegelsymmetrisch geteilten Zangenkörper 1 greift die Hebelplatte 17 des festen Handgriffs 5 ein und ist dort auf dem Zapfen 19 gelagert. Der Zangenkörper 1 wird auf der anderen Seite von einer spiegelsymmetrisch zu Figur 4 ausgebildeten Klemmbacke 6 bzw. dem diesbezüglichen Teil der Klemmbacke 6 abgedeckt, wobei auch hier wiederum der schon erwähnte Steuerhebel 23 und die Rückführfeder 26 in der spiegelsymmetrischen Weise vorgesehen sind. Es versteht sich, daß der Zangenkörper 1 in seinem mitteleren Bereich ein etwa kreisbogenförmig um die Achse 4 angeordnetes Langloch 48 (Figur 3) aufweist, durch welches ein das Gelenk 22 bildender Bolzen hindurchragt, der in seinen beiden Endbereichen mit den beiden Steuerhebeln 23 schwenkbar verbunden ist. Man erkennt so, daß bei einer Verschwenkung des beweglichen Handgriffs 5 und damit der Hebelplatte 17 die beiden Steuerhebel 23 in identischer Weise und Bewegung mitgenommen werden, wobei die die Steuerhebel 23 verbindende Rolle 24 zunächst ihren Anschlag 29 solange nicht verläßt, bis die Klemmbacken 3 und 6 ihre Schließstellung erreicht haben. Erst dann setzt sich bei fortgesetzter Annäherung der Handgriffe 5 und 2 aneinander die Rolle 24 aus dem Anschlag 29 heraus in Bewegung, wobei die Erhöhung 33 als Kraftschwelle überwunden wird. Durch das Abrollen der Rolle 24 an der Steuerfläche 30 bewegt sich das Gelenk 25 auf einer von der geradlinigen Bewegung etwas abweichenden Bahn in Richtung eines Pfeils 49 (Figur 4), wodurch das Zugelement 11 und mit ihm die Abstreiferbacken 8 und 9 in ihren Vorwärtshub gelangen und somit die Abstreifbewegung des von den Schneiden 12 und 13 eingeschlossenen Teils der Isolierung stattfindet.

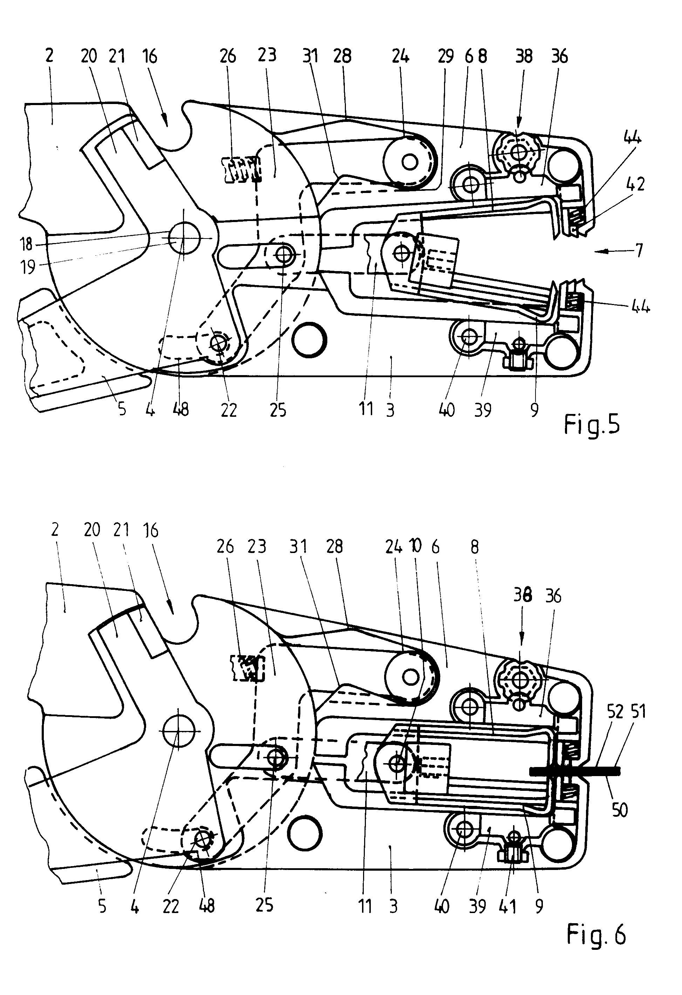

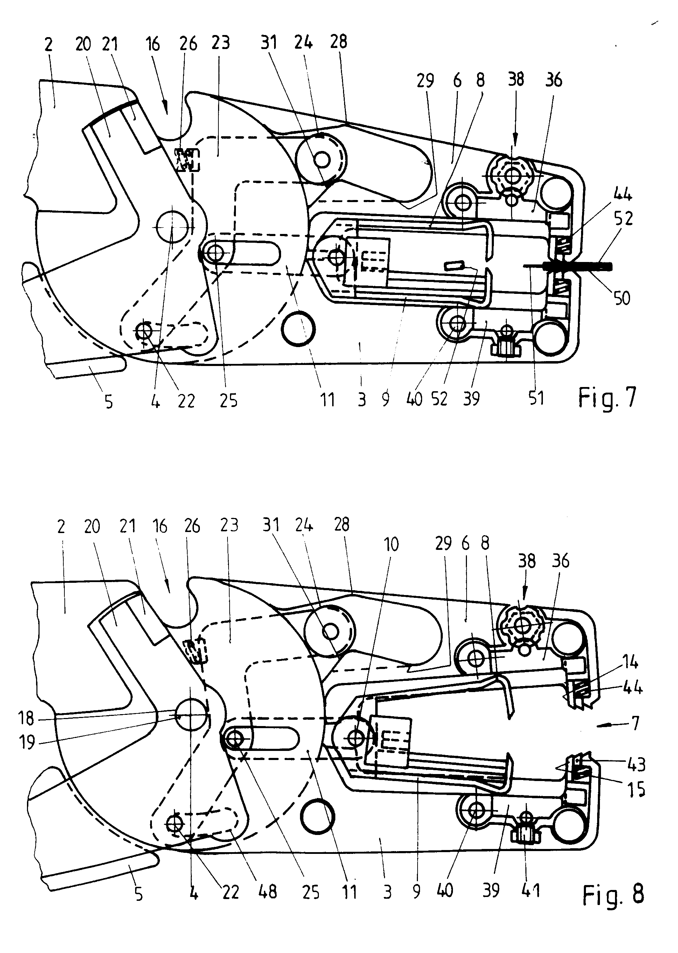

Um diese Verhältnisse noch deutlicher darzulegen, wird auf die Zeichnungsfolge der Figuren 5 bis 8 verwiesen. Figur 5 zeigt die Ausgangsstellung der Handzange. Die Rückführfeder 26 hält die Rolle 24 gegen den Anschlag 29 und zusammen mit der Öffnungsfeder 27 (Figur 2) befinden sich die Klemmbacken 3 und 6 in der in Figur 5 dargestellten offenen Stellung. Das Zangenmaul 7 ist also geöffnet und es kann ein Leiter 50 mit seiner metallenen Seele 51 und seiner Isolierung 52 in das Zangenmaul eingeführt werden, wobei die Länge der Einführung und damit auch die Länge des abzuziehenden Teils der Isolierung 52 durch bekannte Maßnahmen an den Abstreiferbacken 8 und 9 einstellbar ist. Es folgt nun der Schließvorgang der Klemmbacken 3 und 6 und der Abstreiferbacken 8 und 9, indem der bewegliche Handgriff 5 in Richtung auf den festen Handgriff 2 zubewegt wird. Am Ende des Schließvorgangs, wie er in Figur 6 dargestellt ist, haben sich die Klemmvorsprünge 14, 42 und 15, 43 auf die Isolierung 52 des Leiters 50 aufgesetzt bzw. in die Oberfläche sich dabei verankernd eingedrückt, während die Schneiden 12 und 13 in dem eingestellten Maß in das Material der Isolierung 52 eingedrungen sind. Es wird insbesondere darauf hingewiesen, daß bis zu diesem Ende des Schließvorgangs die Rolle 24 nach wie vor in dem Anschlag 29 liegt und auch die Relativlage der Steuerfläche 30 während des gesamten Schließvorgangs der Klemmbacken 3 und 6 relativ zu dem Steuerhebel 23 unverändert bleibt. Erst bei weiterem Zusammendrücken der Handgriffe 2 und 5 und unter Überwindung der eine Kraftschwelle 33 bildenden Erhöhung setzen sich die Abstreiferbacken 8 und 9 in Richtung auf den Grund des Zangenmauls 7 in Bewegung, indem die Rolle 24 an der Steuerfläche 30 abrollt. Hierdurch wird der durch die Schneiden 12 und 13 gebildete Einschnitt in der Isolierung 52 durchgerissen und der zu entfernende Teil entsprechend der Bewegung der Abstreiferbacken 8 und 9 nach hinten von der Seele 51 des Leiters 50 abgezogen. Mit dem Ende dieser Hubbewegung wird die Relativlage gemäß Figur 7 erreicht, indem die Rolle 24 in den Endanschlag 31 eintritt, so daß der Steuerhebel 23 und mit ihm über das Zugelement 11 die Abstreiferbacken 8 und 9 zunächst an einer Umkehr der Bewegungsrichtung gehindert sind, obwohl sich die Handgriffe 2 und 5 am Ende der Abstreiferbewegung wieder voneinander entfernen. Durch die Verriegelung der Rolle 24 an dem Endanschlag 31 bzw. hinter diesem Endanschlag 31 wird mit der Öffnungsbewegung der Handgriffe 2 und 5 dabei zunächst zwangsläufig das Zangenmaul 7 geöffnet, indem sowohl die Klemmbacken 3 und 6 als auch die Abstreiferbacken 8 und 9 in dem hinteren Totpunkt ihrer Hubbewegung sich voneinander entfernen und somit das Maul der Zange geöffnet wird, wie dies Figur 8 darstellt. Erst nachdem dieser Öffnungsvorgang erreicht ist und sich die Handgriffe 2 und 5 noch weiter voneinander entfernen, kommt die Rolle 24 von dem Endanschlag 31 frei und wird in der Ausnehmung 28 wieder so verschoben, daß die Rolle 24 in den Anschlag 29 eintritt, so daß die Ausgangslage gemäß Figur 5 wieder erreicht ist und ein weiterer Abstreifvorgang durchgeführt werden kann. Es versteht sich, daß aus dem geöffneten Maul der freigegebenen Leiter 50 in abisolierter Form sowie das abgezogene Stück der Isolierung herausgenommen werden bzw. herausfallen, so daß hierdurch keine Beeinträchtigung gegeben ist. Insbesondere wird auch die Gefahr vermieden, den abisolierten Teil der Seele 51 durch den Rückhub der Abstreiferbacken 8 und 9 zu verdrücken oder zu beschädigen, weil dieser Rückhub in der Offenstellung des Mauls erfolgt.

**Bezugszeichenliste :**

| | | |
|---|---|---|
| 1 = | | Zangenkörper |
| 2 = | | fester Handgriff |
| 3 = | | feste Klemmbacke |
| 4 = | | gemeinsame Achse |
| 5 = | | beweglicher Handgriff |
| 6 = | | bewegliche Klemmbacke |
| 7 = | | Zangenmaul |
| 8 = | | Abstreiferbacke |
| 9 = | | Abstreiferbacke |
| 10 = | | Achse |
| 11 = | | Zugelement |
| 12 = | | Schneide |
| 13 = | | Scheide |
| 14 = | | Klemmvorsprünge |
| 15 = | | Klemmvorsprünge |
| 16 = | | Schneideinrichtung |
| 17 = | | Hebelplatte |
| 18 = | | Bohrung |
| 19 = | | Zapfen |
| 20 = | | Hebelarm |
| 21 = | | Schneide |
| 22 = | | Gelenk |
| 23 = | | Steuerhebel |
| 24 = | | Rolle |
| 25 = | | Gelenk |
| 26 = | | Rückführfeder |
| 27 = | | Öffnungsfeder |
| 28 = | | Ausnehmung |
| 29 = | | Anschlag |
| 30 = | | Steuerfläche |
| 31 = | | Endanschlag |
| 32 = | | Bohrung |
| 33 = | | Erhöhung |
| 34 = | | Vertiefung |
| 35 = | | Gleitbahn |

36 = Steg
37 = Zapfen
38 = Einstelleinrichtung
39 = Steg
40 = Zapfen
41 = Einstellschraube
42 = beweglicher Klemmvorsprung
43 = beweglicher Klemmvorsprung
44 = Feder
45 = Gegenschneide
46 = Ausnehmung
47 = Durchbrechung
48 = Langloch
49 = Pfeil
50 = Leiter
51 = Seele
52 = Isolierung

## Patentansprüche

1. Handzange zum Abisolieren von Leiterenden mit einem Paar Handgriffe und mit einem Paar an die Leiterisolierung andrückbaren Klemmbacken (3, 6), von denen die erste (3) einstückig mit einem der Handgriffe ausgebildet einen Zangenkörper bildet, an dem der andere Handgriff (5) und die zweite Klemmbacke (6) schwenkbar gelagert sind, mit einem an dem beweglichen Handgriff (5) gegen die Kraft einer Rückführfeder (26) schwenkbar gelagerten und eine Rolle (24) tragenden Steuerhebel (23), einem an der beweglichen Klemmbacke angeordneten, die Ausgangsstellung definierenden Anschlag (29), einer Steuerfläche (30) und einem Endanschlag (31), die der Rolle des Steuerhebels zugeordnet sind, und mit zwei innerhalb der ein Zangenmaul (7) bildenden Klemmbacken angeordneten und von einer Öffnungsfeder (27) belasteten Abstreiferbacken (8, 9), die an ihren dem Zangenmaul abgewandten Enden verschwenkbar miteinander verbunden und gemeinsam mittels eines nach einem vorbestimmten Schwenkweg des beweglichen Handgriffs wirksam werdenden Zugelement (11) in Abstreifrichtung längsverschiebbar sind, dadurch gekennzeichnet, daß der bewegliche Handgriff (5) und die bewegliche Klemmbacke (6) um eine gemeinsame Achse (4) am Zangenkörper (1) schwenkbar gelagert sind, daß die Abstreiferbacken (8, 9) über das Zugelement (11) mit dem Steuerhebel (23) gelenkig verbunden sind, und daß der Anschlag (29), die Steuerfläche (30) und der Endanschlag (31) in der beweglichen Klemmbacke (6) angeordnet und ausschließlich der Abstreifbewegung zugeordnet sind.

2. Handzange nach Anspruch 1, dadurch gekennzeichnet, daß zwischen Anschlag (29) und Steuerfläche (30) eine eine Kraftschwelle bildende Erhöhung (33), ein Nocken o. dgl. vorgesehen ist.

3. Handzange nach Anspruch 1 und 2, dadurch gekennzeichnet, daß der Endanschlag (31) etwa rechtwinklig zu der Steuerfläche (30) angeordnet ist.

4. Handzange nach Anspruch 1, dadurch gekennzeichnet, daß der Steuerhebel (23) zwischen seinem Gelenk (22) an dem beweglichen Handgriff (5) und seinem Gelenk an der beweglichen Klemmbacke (6) mit dem Zugelement (11) verbunden ist.

5. Handzange nach Anspruch 1, dadurch gekennzeichnet, daß die den Steuerhebel (23) belastende Rückführfeder (26) zur Rückführung der Abstreifbacken (8, 9) ausgebildet und angeordnet ist.

6. Handzange nach Anspruch 5, dadurch gekennzeichnet, daß die Rückführfeder (26) etwa in der Steuerfläche (30) wirkend angeordnet ist.

7. Handzange nach Anspruch 1, dadurch gekennzeichnet, daß in der beweglichen Klemmbacke (6) eine bumerangartige Ausnehmung (28) vorgesehen ist, die den Anschlag (29), die Steuerfläche (30) und den Endanschlag (31) bildet und in der die Rolle (24) des Steuerhebels (23) geführt und geschützt untergebracht ist.

8. Handzange nach Anspruch 1, 4 und 7, daß der Steuerhebel (23) etwa rechtwinklig abgekröpfte Form aufweist und mit einem Schenkel in die Ausnehmung (28) an der beweglichen Klemmbacke (6) einragend vorgesehen.

9. Handzange nach Anspruch 1, dadurch gekennzeichnet, daß jeder Klemmbacken (6, 3) mindestens einen beweglichen Klemmvorsprung (42, 43) aufweist, wobei sich der bewegliche Klemmvorsprung an einem Steg (36, 39) abstützt, der schwenkbar in der Klemmbacke gelagert und durch ein Stellglied (38, 41) verstellbar ist.

10. Handzange nach Anspruch 9, dadurch gekennzeichnet, daß der Steg (26, 39) zugleich eine einstellbare Abstützung für eine Abstreiferbacke (8, 9) bildet.

## Claims

1. Hand pliers for the stripping off of conductor ends, with a pair of handgrips and with a pair of clamping jaws pressable against the conductor insulation, of which the first jaw (3), which is constructed integrally with one of the handgrips, forms a pliers body, at which the other handgrip (15) and the second clamping jaw (6) are borne to be pivotable, with a control lever (23), which is borne at the movable handgrip (3) to be pivotable against the force of a restoring spring (26) and carries a roller (24), an abutment (29), which is arranged at the movable clamping jaw and defines the initial setting, a control surface (30) and an end abutment (31), which are associated with the roller of the control lever, and with two stripper jaws (8, 9), which are arranged within the clamping jaws forming a pliers mouth (7), are loaded by an opening spring (27), are pivotably connected with one another at their ends remote from the pliers mouth and are longitudinally displaceable together in stripping direction by means of a drawing element (11) becoming effective after a predetermined pivot travel of the movable handgrips, characterised thereby, that the movable handgrip (5) and the movable clamping jaw (6) are borne to be pivotable about a common axis (4) at the pliers body (1), that the stripper jaws (8, 9) are articulatedly connected with the control lever (23) by way of the drawing element (11), and that the abutment (29), the control surface (30) and the end abutment (31) are arranged in the movable clamping jaw (16) and exclusively associated with the stripping movement.

2. Hand pliers according to claim 1, characterised thereby, that an elevation (33), a cam or the like, forming an increase in force is provided between abutment (29) and control surface (30).

3. Hand pliers according to claim 1 and 2, characterised thereby, that the end abutment (31) is arranged about at right angles to the control surface (30).

4. Hand pliers according to claim 1, characterised thereby, that the control lever (23) is connected, between its pivot (22) at the movable handgrip (5) and its pivot at the movable clamping jaw (6), with the drawing element (11).

5. Handgrip pliers according to claim 1, characterised thereby, that the restoring spring (26) loading the control lever (23) is constructed and arranged for the restoring of the stripper jaws (8, 9).

6. Hand pliers according to claim 5, characterised thereby, that the restoring spring (26) is arranged to be effective about in the control surface (3a).

7. Hand pliers according to claim 1, characterised thereby, that a boomerang-shaped recess (28), which forms the abutment (29), the control surface (30) and the end abutment (31) and in which the roller (24) of the control lever (23) is guided and accommodated in protected manner, is provided in the movable clamping jaw (6).

8. Hand pliers according to claim 1, 4 and 7, characterised thereby, that the control lever (23) has a shape offset at about right angles and is provided with a limb projecting into the recess (28) of the movable clamping jaw (6).

9. Hand pliers according to claim 1, characterised thereby, that each clamping jaw (6, 3) has at least one movable clamping projection (42, 43), wherein the movable clamping projection is supported at a web (36, 39), which is borne in the clamping jaw to be pivotable and is adjustable by a setting element (38, 41).

10. Hand pliers according to claim 9, characterised thereby, that the web (36, 39) at the same time forms an adjustable support for one stripper jaw (8, 9).

**Revendications**

1. Pince à main pour dénuder les extrémités de conducteurs, avec une paire de poignées et avec une paire de mâchoires de serrage (3, 6) pouvant être pressées contre l'isolation du conducteur, dont la première (3) constitue, en étant d'une seule pièce avec une des poignées, un corps de pince sur lequel sont montées pivotantes l'autre poignée (5) et la deuxième mâchoire de serrage (6), avec un levier de commande (23) monté pivotant sur la poignée mobile (5) et pouvant pivoter contre la force d'un ressort de rappel (26) et portant un galet (24); une butée (29) disposée sur la mâchoire mobile, définissant la position initiale, une surface de commande (30) et une butée de fin de course (31) qui est associée au galet du levier de commande, et avec deux mâchoires de dénudage (8, 9) disposées à l'intérieur des mâchoires de serrage formant un bec (7) de pince et sollicitées par un ressort d'ouverture (27), qui sont articulées ensemble sur leurs extrémités opposées au bec de la pince et peuvent coulisser ensemble longitudinalement dans le sens du dénudage au moyen d'un élément de traction (11) devenant actif après une course de pivotement prédéterminée de la poignée mobile,

**caractérisée** en ce que la poignée mobile (5) et la mâchoire mobile (6) sont montées pivotantes autour d'un axe commun (4) sur le corps de pince (1), en ce que les mâchoires de dénudage (8, 9) sont reliées de manière articulée avec le levier de commande (23) par l'intermédiaire de l'élément de traction (11), et en ce que la butée (29), la surface de commande (30) et la butée de fin de course (31) sont disposées dans la mâchoire de serrage mobile (6) et associées exclusivement au mouvement de dénudage.

2. Pince à main selon la revendication 1, caractérisée en ce qu'une came ou autre élément similaire est prévue entre la butée (29) et la surface de commande (30) en constituant une rampe (33) qui donne lieu à une augmentation de force.

3. Pince à main selon les revendications 1 et 2, caractérisée en ce que la butée de fin de course (31) est disposée à peu près perpendiculairement à la surface de commande (30).

4. Pince à main selon la revendication 1, caractérisée en ce que le levier de commande (23) est relié à l'élément de traction (11) entre son articulation (22) sur la poignée mobile (5) et son articulation sur la mâchoire de serrage mobile (6).

5. Pince à main selon la revendication 1, caractérisée en ce que le ressort de rappel (26) sollicitant le levier de commande (23) est conformé et disposé pour le rappel des mâchoires de dénudage (8, 9).

6. Pince à main selon la revendication 5, caractérisée en ce que le ressort de rappel (26) est disposé sensiblement de manière à agir dans la surface de commande (30).

7. Pince à main selon la revendication 1, caractérisée en ce qu'il est prévu dans la mâchoire de serrage mobile (6) un évidement en forme de boomerang qui constitue la butée (29), la surface de commande (30) et la butée de fin de course (31), et dans lequel est guidé et logé, en étant protégé, le galet (24) du levier de commande (23).

8. Pince à main selon les revendications 1, 4 et 7, caractérisée en ce que le levier de commande (23) présente une forme coudée, à peu près à angle droit, et est prévu avec un bras s'engageant dans l'évidement (28) sur la mâchoire de serrage mobile (6).

9. Pince à main selon la revendication 1, caractérisée en ce que chaque mâchoire de serrage (6, 3) présente au moins un saillant mobile de serrage (42, 43), tandis que le saillant mobile de serrage s'appuie contre un bras (36, 39) qui est monté pivotant dans la mâchoire de serrage et est réglable au moyen d'un organe de réglage (38, 41).

10. Pince à main selon la revendication 9, caractérisée en ce que le bras (36, 39) constitue en même temps un appui réglable pour une mâchoire de dénudage (8, 9).

Fig. 1

Fig.2

Fig. 3

EP 0 309 871 B1

Fig. 4

EP 0 309 871 B1

Fig.5

Fig. 6

Fig. 7

Fig. 8